# FASCICULE DE BREVET EUROPEEN

(11) **EP 2 431 911 B1**
(45) Date de publication et mention de la délivrance du brevet: **25.05.2016**
(21) Numéro de dépôt: 11181299.6
(22) Date de dépôt: 14.09.2011
(51) Int. Cl.: G06K 7/00, G07F 19/00

(54) **Dispositif de protection d'un connecteur et d'un fil de communication d'un lecteur de carte à mémoire.**
Schutzvorrichtung für einen Stecker und ein Kommunikationskabel eines Speicherkartenlesegerätes
Device for protecting a connector and a communication wire of a memory-card reader.

(30) Priorité: 15.09.2010 FR 1057383
(43) Date de publication de la demande: 21.03.2012
(73) Titulaire: Ingenico Group, 75015 Paris (FR)
(72) Inventeur: Rossi, Laurent, 28100 DREUX (FR); Schang, Bernard, 78320 LE MESNIL SAINT DENIS (FR)
(74) Mandataire: Vidon Brevets & Stratégie

(56) Documents cités:
- EP-A1- 2 431 901
- FR-A1- 2 934 070

## Description

### 1 DOMAINE DE L'INVENTION

La présente invention se rapporte au domaine de la protection des lecteurs de carte à mémoire comprenant un connecteur de carte à mémoire (CAM). Des lecteurs de carte à mémoire sont notamment employés dans de nombreux appareils tels que des terminaux de paiement, des dispositifs d'authentification ou d'identification ou encore des dispositifs de lecture de contenus.

La présente invention se rapporte plus particulièrement à la sécurisation d'un connecteur et d'une liaison de communication de tels lecteurs de carte à mémoire, afin de les protéger contre toutes intrusions de tiers malintentionnés.

### 2 ART ANTERIEUR

Les appareils qui intègrent des lecteurs de carte à mémoire, tels que les terminaux de paiement électroniques (TPE) et les distributeurs automatiques de billets (DAB) constituent une pièce maîtresse du dispositif de sécurisation des paiements électroniques réalisés par les utilisateurs.

En effet, les terminaux de paiement électroniques permettent de faire le lien entre la carte de paiement et son porteur, entre le fournisseur et le réseau. En outre, ils enregistrent la transaction.

Les distributeurs automatiques de billets permettent le retrait de billets de banque après identification du porteur. Ils sont systématiquement connectés au centre informatique des banques émettrices de carte lors de chaque transaction. Les établissements de crédit sont responsables de leur fonctionnement.

Ces terminaux de paiement, comprennent de nombreux dispositifs de sécurisation et mettent en oeuvre de nombreuses méthodes permettant d'assurer que les appareils sont utilisés conformément aux usages pour lesquels ils ont été prévus et respectent des normes de sécurité qui sont imposés par des organismes de certification.

Par exemple, dans le domaine des terminaux de paiement électroniques (TPE) les fabricants sont contraints de respecter depuis de 1er Janvier 2008, la norme PCI PED 2.0 (Payment Card Industry Pin Entry Device).

Cette norme sécuritaire consiste notamment à sécuriser le clavier de saisie des terminaux en protégeant la saisie du code confidentiel, et à bloquer le terminal en cas d'intrusion (frauduleuse ou accidentelle).

Cependant, outre la sécurisation du clavier, l'expérience montre que la mise à disposition de terminaux de paiement sur des points de vente permet aux tiers malintentionnés un accès relativement aisé à ces terminaux de paiement. Une des fraudes dernièrement constatée correspond au fait d'espionner les données confidentielles sur la liaison de communication d'entrée/sortie couramment désigné par l'acronyme «IO_CAM», issu de l'anglais *« Input*/*Output»,* l'acronyme CAM correspondant à l'expression « *carte à mémoire* ». Par ailleurs, on appelle Entrées-Sorties les échanges d'informations entre le processeur du terminal de paiement et les périphériques qui lui sont associés. Cette liaison de communication d'entrée/sorties est directement connectée au connecteur de carte à mémoire du terminal de paiement.

En janvier 2010, Ross Anderson, professeur de Cambridge, spécialiste de la sécurité informatique, a défrayé la chronique relative à la sécurisation des données. En effet, il a découvert comment fausser le dialogue entre une carte et un terminal de paiement, de manière à faire croire à tort à celui-ci que le porteur de cartes a tapé son code.

Ainsi, une nouvelle fraude correspond à l'introduction dans le terminal de paiement d'un leurre faisant croire au terminal de paiement que le porteur de carte bancaire a bel et bien tapé son code confidentiel. Une telle fraude correspond concrètement à l'insertion d'un micro « bug » ou anomalie logicielle dans la fente d'insertion du connecteur de carte de paiement.

Un tel « bug » peut prendre des formes diverses, par exemple le « bug » peut être un micro montage électronique servant à espionner les données transactionnelles entre la carte de paiement et le terminal de paiement. Le « bug » peut également correspondre à une simple liaison insérée dans le connecteur de carte à mémoire, reliant la liaison de communication d'entrée/sorties du terminal de paiement à un montage externe destiné, à espionner, ou à tout autre action malveillante à l'encontre des données bancaires d'un utilisateur.

Afin de protéger la liaison d'entrées/sorties et le connecteur de carte à mémoire, des solutions de protection ont été développées. Une première solution consiste à détecter une variation de la capacité des pistes conductrices du circuit imprimé tel que divulgué dans le document FR 2 934 070. L'inconvénient de cette technique est qu'une telle détection intervient après l'endommagement modifiant la capacité d'une des pistes du circuit imprimé. D'autres solutions sont de type « electro-mécanique », mettant par exemple en oeuvre un grillage flexible (en anglais, *« wire mesh »)* ou encore un treillis de liaisons sur lequel des tests de tensions sont par exemple effectués.

Ces solutions coûteuses visent explicitement à empêcher l'accès par un tiers malintentionné aux liaisons d'entrées/sorties et au connecteur de carte à mémoire.

De façon générale on associe en parallèle plusieurs « Wire mesh » ou treillis de liaisons pour protéger la liaison d'entrées/sorties « IO_CAM ». Un treillis de liaisons implanté dans une des couches internes du PCB (circuit électronique imprimé) peut être utilisé pour protéger le côté inférieur du connecteur « CAM », tandis qu'un « wire mesh » (flexible possédant des pistes adjacentes couvrant la superficie à protéger) sera disposé côté supérieur du connecteur, un troisième dispositif (cache IO) pourra être déployé juste en face des broches de connections reliant le connecteur au PCB. Ce dernier dispositif est un mini circuit imprimé dans lequel est implanté un treillis de liaisons, le tout étant connecté (soudé) au circuit imprimé principal de façon à réaliser un « mini mur » entre les broches de connections et la fente d'insertion du connecteur.

Ces divers dispositifs sont testés sur des niveaux de tensions ou signaux.

L'inconvénient de ces solutions réside dans le fait que le grillage par nature possède des orifices qui rendent possible une éventuelle intrusion dans le connecteur de carte à mémoire ou encore une éventuelle dégradation de la liaison d'entrées/sorties.

Ainsi, à ce jour, les inventeurs n'ont identifié aucune solution simple et peu coûteuse permettant une protection mais également une surveillance efficace de la liaison d'entrées/sorties et du connecteur de carte à mémoire contre toutes intrusions de tiers malintentionnés.

### 3 RESUME DE L'INVENTION

L'invention ne présente pas ces inconvénients de l'art antérieur. En effet l'invention concerne un dispositif selon la revendication 1.

Selon une caractéristique particulière de l'invention, ledit dispositif de protection utilise un détecteur (wire mesh) existant et réalise une mesure de capacité sur ledit détecteur.

Selon un mode de réalisation particulier, ledit dispositif de protection comprend en outre des moyens de calibrage délivrant ladite capacité de référence.

Selon un mode de réalisation particulier ledit dispositif de protection comprend en outre un système de compensation environnemental modifiant ladite capacité de référence en fonction d'un critère prédéterminé.

Selon une caractéristique particulière, ledit au moins un détecteur capacitif est disposé sur appelé premier détecteur capacitif est disposé sur un connecteur de carte à mémoire.

Selon une caractéristique particulière, ledit dispositif de protection comprend en outre un deuxième détecteur capacitif connecté à une liaison entrée/sortie du connecteur de carte à mémoire.

Selon un mode de réalisation particulier, ledit premier détecteur capacitif est une piste de cuivre de forme spirale carrée.

Selon un mode de réalisation particulier, ledit premier détecteur capacitif est déployé selon un plan plein.

Selon un autre aspect, l'invention concerne également un procédé selon la revendication 7.

Selon une caractéristique particulière, ledit procédé de protection comprend en outre une étape de calibrage délivrant ladite capacité de référence.

Selon un autre aspect, l'invention se rapporte également à un terminal de paiement. Selon l'invention, un tel terminal de paiement comprend un dispositif de protection selon la revendication 1.

Selon un autre aspect, l'invention concerne également un programme d'ordinateur qui comprend des instructions de code programme pour la mise en oeuvre du procédé de selon la revendication 7 lorsque le programme est exécuté par un processeur.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un schéma d'un dispositif de protection selon l'invention ;
- la figure 2 illustre des courbes de calibrage du dispositif de protection selon l'invention ;
- les figures 3A à 3D, présentent la disposition et le fonctionnement d'un détecteur capacitif sur un connecteur de carte mémoire, ainsi que deux variantes de détecteur capacitif ;
- les figures 4A et 4B, présentent respectivement le schéma d'un deuxième mode de réalisation de l'invention, et la structure électronique du deuxième détecteur capacitif associé ;
- la figure 5 illustre le procédé de protection selon l'invention ;
- La figure 6 schématise un terminal de paiement selon l'invention.

### 5 DESCRIPTION DETAILLEE DE L'INVENTION

### 5.1 Rappel du principe de l'invention

L'invention propose de surveiller efficacement et simplement la liaison d'entrées/sorties et du connecteur de carte à mémoire contre toutes intrusions de tiers malintentionnés, en utilisant un dispositif de protection mettant en oeuvre une mesure capacitive d'au moins un détecteur capacitif disposé sur le connecteur de carte à mémoire d'un terminal de paiement.

Comme le dispositif de protection met en oeuvre une mesure capacitive, une intrusion d'un élément conducteur est détectée du fait que l'intrusion modifie les lignes de champs magnétiques, et par voie de conséquence la capacité de référence du détecteur capacitif au-delà d'un seuil prédéterminé.

Selon l'invention, le dispositif de protection d'un terminal de paiement comprend au moins un détecteur capacitif introduit dans un volume formé par un premier plan de masse reposant sur la surface du circuit imprimé du terminal de paiement et un second plan de masse disposé au fond du boîtier plastique du terminal de paiement, un microprocesseur de mesure capacitive et des moyens de transmission d'une information signalant une variation de la capacité du détecteur capacitif au-delà d'un seuil prédéterminé, signalant en d'autres termes une intrusion dans le volume surveillé.

Selon un premier mode de réalisation de l'invention, un premier détecteur capacitif est déployé sur un connecteur de carte à mémoire du terminal de paiement.

Selon un autre mode de réalisation, un deuxième détecteur capacitif est ajouté dans le dispositif de protection et relié à une liaison d'entrée/sortie du connecteur de carte à mémoire.

Selon l'invention, le dispositif de protection est apte à protéger par mesure capacitive un terminal de paiement. Un tel dispositif de protection peut se présenter sous n'importe quelle forme. La forme du dispositif peut être adaptée en fonction du boîtier, ou encore du connecteur de carte à mémoire à protéger.

Par la suite, on détaille un mode de réalisation d'un dispositif de protection selon l'invention. Il est clair cependant que l'invention ne se limite pas à cette application particulière, mais peut également être mise en oeuvre dans de nombreux autres contextes de protection de circuits imprimés électroniques et plus généralement dans tous les cas où les caractéristiques listées par la suite sont intéressantes.

### Structure générale d'un dispositif selon l'invention

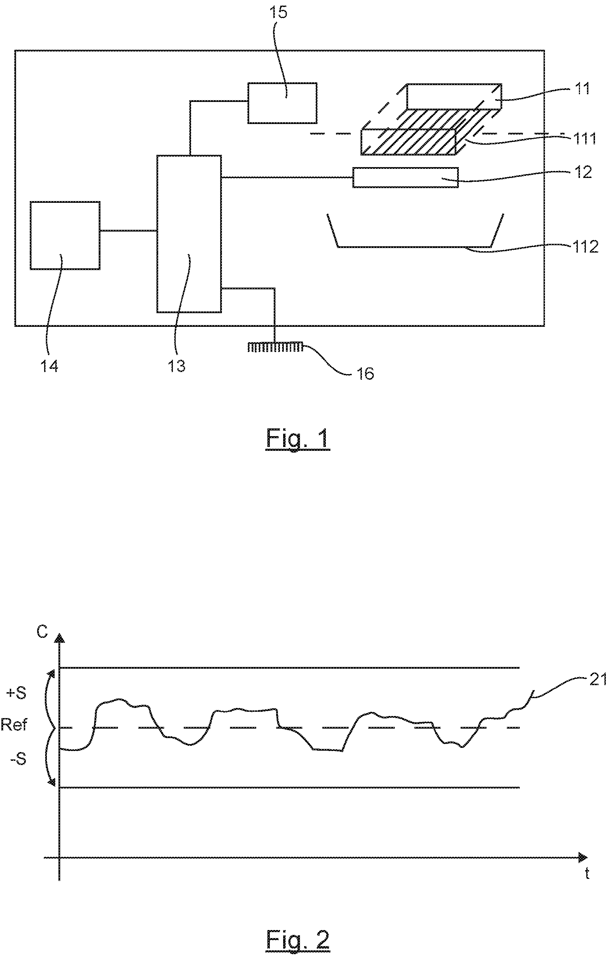

On présente en relation avec la figure 1, la structure générale d'un dispositif de protection 10 selon l'invention. Un tel dispositif comprend tout d'abord un détecteur capacitif 12 appartenant à un volume défini par un premier plan de masse 111 d'un circuit imprimé électronique 11 et par un second plan de masse 112 disposé au fond du boîtier du terminal de paiement.

Ces plans de masse produisent une action comparable à celle d'une cage de Faraday, c'est-à-dire qu'ils permettent de protéger le dispositif de protection d'éventuelles perturbations électromagnétiques extérieures.

Le plan de masse disposé sur le fond du boîtier du terminal de paiement est par exemple obtenu au moyen d'un procédé d'étalement de peinture conductrice connu.

Par ailleurs, des moyens de calibrage 15, reliés électriquement au détecteur capacitif, permettent d'en évaluer la capacité de référence. Ces moyens de calibrage 15 seront par la suite davantage détaillés.

En outre, le dispositif de protection selon l'invention comprend également un microprocesseur de mesure capacitive 13 relié électriquement au détecteur capacitif 12 et à la masse 16. Un tel microprocesseur de mesure utilise par exemple un capteur capacitif correspondant à une sonde pour mesurer la capacité du détecteur capacitif.

Une telle sonde est très généralement réalisée avec une électrode plane de mesure entourée d'un anneau de garde. L'électrode forme alors avec le détecteur capacitif un condensateur plan. Une électrode de garde contenue dans l'anneau de garde est placée autour de celle de mesure et son potentiel est porté à la même valeur afin d'améliorer la linéarité en rendant les lignes de champ normales (perpendiculaires) à l'électrode de mesure. L'électrode de garde permet ainsi d'éliminer les effets de bord.

Grâce à ces moyens de mesure 13, une variation de la capacité du détecteur capacitif est détectée. Cette variation est par exemple obtenue en comparant la capacité mesurée à la capacité de référence préalablement déterminée par les moyens de calibrage 15. Cette mesure est préférentiellement effectuée en temps réel afin d'avertir instantanément le processeur sécurisé d'un terminal de paiement via des moyens de transmission 14.

Indépendamment de la fréquence de mesure sélectionnée par l'utilisateur, l'ensemble des mesures est piloté par un programme d'ordinateur enregistré au sein des moyens de mesures.

Plus précisément, les moyens de mesure déterminent une différence entre la capacité du détecteur capacitif mesurée par les moyens de mesure 13, et la capacité de référence déterminée par les moyens de calibrage. Si la valeur absolue de cette différence excède un seuil prédéterminé S, les moyens de transmission du dispositif de protection selon l'invention signalent au processeur sécurisé du terminal sécurisé de se mettre en mode « *attaque ».*

Ainsi, le dispositif de protection selon l'invention permet de déterminer tout contact avec le détecteur capacitif disposé dans un volume défini par le premier plan de masse 111 du circuit imprimé électronique 11 et par le second plan de masse 112 disposé au fond du boîtier du terminal de paiement à protéger. En particulier, toute intrusion (même sans contact direct avec le capteur) par un tiers malintentionné sera détectée, du fait que cette intrusion, notamment par l'introduction d'un élément conducteur modifie de façon significative la capacité du détecteur capacitif.

En outre, ce dispositif de protection tire profit du détecteur capacitif et de la mesure capacitive en évitant de mettre en oeuvre un routage géométrique complexe ou encore en évitant d'utiliser un matériel de protection facilement dégradable et onéreux tel que des grillages flexibles.

### Moyens de calibrage du détenteur capacitif considéré

Le calibrage mis en oeuvre par les moyens de calibrage 15, est nécessaire du fait que la valeur de la capacité est sensible aux variations extérieures.

En effet, il est connu que la valeur de capacité varie en fonction de différents facteurs. Par exemple, la capacité d'un détecteur capacitif varie en fonction de l'hystérésis de charge dû à la magnétisation d'un matériau, l'effet d'une batterie du terminal de paiement, ou encore la température, l'humidité, le vieillissement notamment par oxydation des matériaux constituant le détecteur capacitif, etc.

On présente en relation avec la figure 2, représentant un exemple de courbes de calibrage du dispositif de protection selon l'invention, la procédure mise en oeuvre par les moyens de calibrage délivrant la capacité de référence du détecteur capacitif.

Les moyens de calibrage mesurent 21 (par exemple d'une manière similaire à celle utilisée par les moyens de mesure précédemment décrits) la capacité du détecteur capacitif en fonction du temps. La courbe de mesure 21 représentée sur la figure 2 atteste que la capacité varie en fonction du temps, notamment en fonction de la température environnante.

Les moyens de calibrage moyennent les données de mesure de capacité de la courbe de mesure de sorte qu'une valeur de référence *Ref* est obtenue.

En outre, les moyens de calibrage déterminent par exemple un seuil de variation *S* de capacité au-delà duquel la variation de capacité est anormale. Ainsi, les moyens de calibrage déterminent la plage de valeur de capacités centrée sur la valeur de référence permettant d'attester un fonctionnement « *normal* » et sécurisé du circuit imprimé du terminal de paiement.

Préférentiellement, la valeur de référence et le seuil prédéterminé *S* sont enregistrés dans une mémoire et transmis aux moyens de mesure afin que ces derniers déterminent une intrusion d'un tiers malintentionné visant à détériorer le circuit imprimé électronique.

De manière optionnelle, les moyens de calibrages comprennent en outre un système de compensation environnemental visant à adapter les valeurs de référence et de seuil prédéterminé *S* en fonction d'un paramètre sélectionné par l'utilisateur du terminal de paiement.

Par exemple, la température ambiante à Singapour étant très différente de la température à Stockholm, l'utilisateur adapte en fonction de sa localisation la référence et la plage de variation de capacité autorisée.

De même selon un autre exemple, l'utilisateur peut adapter cette plage de variation au fur et à mesure du vieillissement du terminal de paiement, selon des recommandations du constructeur mentionnées dans une notice d'utilisation.

### 5.2 Description d'un premier mode de réalisation d'un dispositif selon l'invention

### Structure du dispositif de protection selon ce premier mode de réalisation

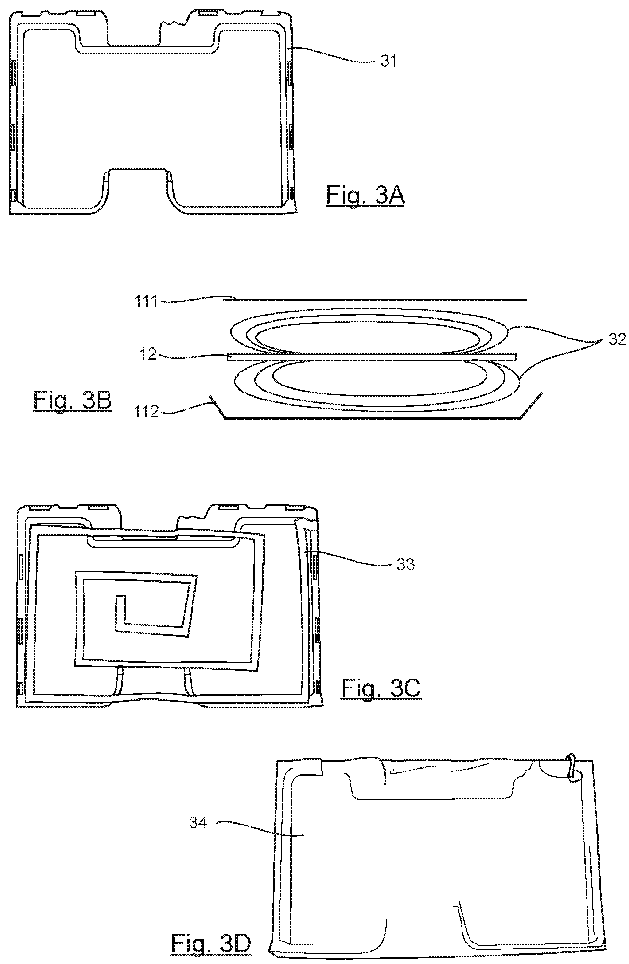

On présente dans ce mode de réalisation représenté par les figures 3 A à 3D, un dispositif de protection selon l'invention dans lequel un premier détecteur capacitif a été monté sur le connecteur de carte à mémoire représenté sur la figure 3A.

Le premier détecteur capacitif placé sur le connecteur de carte à mémoire mesure dans un volume défini par un premier plan de masse 111 d'un circuit imprimé électronique 11 et par un second plan de masse 112 disposé au fond du boîtier du terminal de paiement, la capacité de ce volume.

Ainsi, toute introduction d'un objet même très petit, constitué d'une ou plusieurs parties conductrices, entre le détecteur capacitif et l'un des plans de masse (définissant le volume contenant le détecteur capacitif), modifie les lignes de champs 32 représentées sur la figure 3B.

Cette modification de lignes de champs entraîne une variation de la capacité du volume au delà du seuil prédéterminé défini précédemment par les moyens de calibrage.

### Type de détecteur capacitif

Un détecteur capacitif prenant la forme d'une simple piste de cuivre est par exemple utilisé et représenté sur la figure 3C. Cette piste prend par exemple la forme d'une spirale carrée 33.

Selon une autre variante, le détecteur 12 correspond à un plan plein 34 et est disposé sur une surface du connecteur à carte mémoire du terminal de paiement par exemple.

Un détecteur capacitif correspondant à un plan plein, prend la forme d'une surface capacitive. Plus précisément, une technologie capacitive de surface consiste en un revêtement conducteur uniforme sur un isolant. Lors de l'utilisation, des électrodes placées sur le bord de l'isolant répartissent un courant de faible tension de manière égale sur toute la couche conductrice, créant ainsi un champ électrique uniforme. Lorsqu'un objet rentre en contact avec la surface, cela a pour effet d'attirer le courant de chaque coin du champ électrique.

De manière optionnelle, un contrôleur calcule les coordonnées du contact en mesurant le courant. Il transmet ensuite ces coordonnées au processeur sécurisé du terminal de paiement.

Selon un autre mode de réalisation, le détecteur capacitif peut prendre la forme d'un treillis (non représenté) de fils conducteurs très fins (moins de 10 µm) noyé entre des couches d'isolant par exemple du verre ou des films de plastique laminés.

Un tel treillis peut être plan ou tridimensionnel avec un maillage plus ou moins dense. Un simple fil, qui est disposé de façon particulière, peut également être suffisant dans certains cas de figure.

Par ailleurs, le dispositif de protection selon l'invention peut également être connecté électriquement à un circuit imprimé possédant un détecteur capacitif existant constitué d'une partie conductrice et d'une partie isolante. Dans ce cas, le dispositif de protection selon l'invention place des électrodes sur le bord de l'isolant afin de répartir un courant de faible tension de manière égale sur toute la partie conductrice, créant ainsi un champ électrique uniforme. Le détecteur existant est par ce biais rendu capacitif.

### 5.3 Description d'un deuxième mode de réalisation d'un dispositif selon l'invention

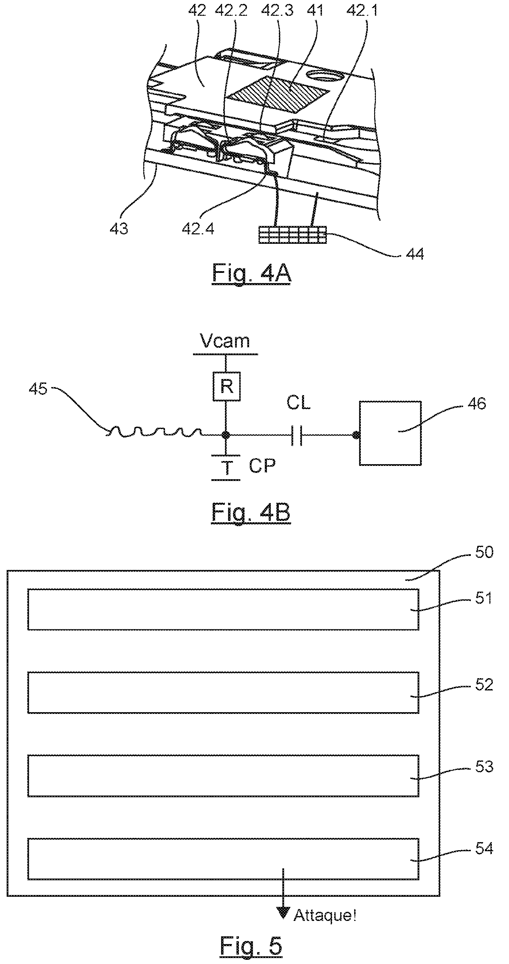

On représente en relation avec la figure 4A, le schéma d'un deuxième mode de réalisation de l'invention. Ce deuxième mode de réalisation ajoute en plus du premier détecteur capacitif 41 disposé sur le connecteur de carte à mémoire, un deuxième détecteur capacitif afin d'interdire l'accès aux liaisons du connecteur de carte à mémoire, en particulier la liaison « IO_CAM » (de l'anglais pour « Input/output »).

Comme illustré en figure 4A, le connecteur de carte à mémoire 42 est monté sur le circuit imprimé 43. Le connecteur de carte à mémoire présente une fente 42.1 dans laquelle la carte peut être introduite. Le connecteur de carte à mémoire comprend également un ensemble de liaisons 42.2 permettant une connexion de la carte, une fois que celle-ci est insérée, avec un processeur de l'appareil.

Ces liaisons 42.2 présentent un léger renflement 42.3 au niveau de la zone de connexion avec la carte, au sein du connecteur de carte à mémoire. Les liaisons sont ensuite conformées pour qu'elles s'étendent vers le circuit imprimé 43. Elles rejoignent celui-ci au niveau d'une zone intermédiaire dans laquelle les liaisons 42.4 sont reliées au circuit imprimé 43.

Le deuxième détecteur capacitif 44 est disposé de sorte qu'il empêche l'accès à au moins certaines liaisons et notamment la liaison « IO_CAM ».

Une structure électronique du deuxième détecteur capacitif est représentée en relation avec la figure 4B. Selon cette structure, un condensateur de liaison *CL* met en oeuvre un couplage capacitif permettant d'évaluer la capacité de la liaison IO_CAM. Par ailleurs, ce détecteur est alimenté par une tension nominale *Vcam* et comprend en outre une résistance R et une capacité parasite *CP*.

*Vcam* et R dépendent du terminal et plus particulièrement des normes EMV et sont présentent dans tous les terminaux de paiement. La capacité de liaison CL est directement liée à l'invention, elle est d'une valeur de 220 pF (à titre indicatif), cette valeur peut varier en fonction des dimensions des pistes.

### 5.4 Description d'un mode de réalisation du procédé de protection selon l'invention

On présente en relation avec la figure 5, le procédé de protection 50 d'un circuit imprimé électronique selon l'invention.

Un tel procédé comprend
- une étape de disposition 51 d'au moins un détecteur capacitif sur une couche du circuit imprimé du terminal de paiement,
- une étape de calibrage 52 délivrant la capacité de référence du détecteur capacitif,
- une étape de mesure capacitive 53 mise en oeuvre par un microprocesseur de mesure capacitive relié électriquement au détecteur capacitif, le microprocesseur étant configuré pour détecter une variation de capacité du détecteur capacitif ;
- une étape de transmission 54 d'une information « *Attaque !* », représentative de la variation de capacité, lorsqu'une valeur absolue d'une différence entre la capacité mesurée et la capacité de référence excède un seuil prédéterminé.

En outre, l'étape de calibrage pourra être réitérée selon une procédure d'utilisation connue de l'utilisateur.

Selon un mode de réalisation particulier, l'étape de calibrage comprend en outre une étape de compensation environnementale, visant à prendre en compte l'influence naturelle de certains paramètres tels que : l'hystérésis de charge dû à la magnétisation d'un matériau, l'effet d'une batterie du terminal de paiement, ou encore la température, l'humidité, le vieillissement notamment par oxydation des matériaux constituant le détecteur capacitif, etc.

Le procédé de protection mise en oeuvre par un dispositif de protection conforme au deuxième mode de réalisation décrit précédemment, met en oeuvre deux détecteurs capacitifs, l'un étant disposé sur le connecteur de carte à mémoire et l'autre relié à la liaison d'entrée/sortie du connecteur de carte à mémoire. Les étapes du procédé précédemment décrit sont en conséquence effectuées pour chaque détecteur capacitif mis en oeuvre.

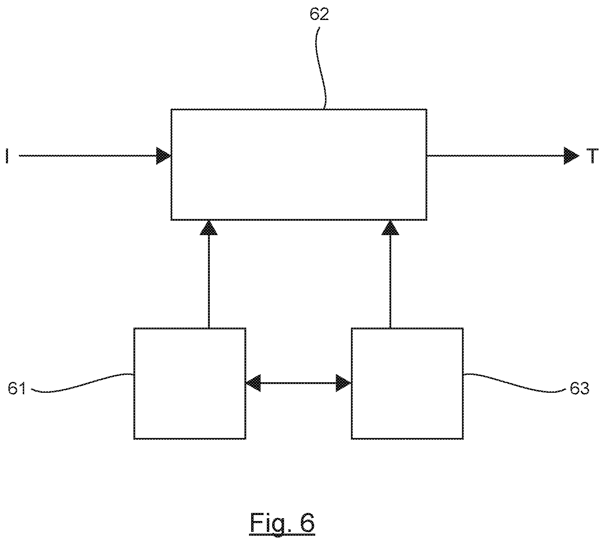

On présente, en relation avec la figure 6, un mode de réalisation d'un terminal de paiement selon l'invention.

Un tel terminal comprend une mémoire 61 constituée d'une mémoire tampon, une unité de traitement 62, équipée par exemple d'un microprocesseur, et pilotée par le programme d'ordinateur 63, mettant en oeuvre le procédé de protection selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée au moins une information I, telle que des identifiants de zones de localisation. Le microprocesseur de l'unité de traitement 62 met en oeuvre les étapes du procédé de protection décrit précédemment, selon les instructions du programme d'ordinateur 63, pour délivrer une information traitée T, telle que la détection d'une attaque entraînant la suppression des données protégées. Pour cela, le terminal comprend, outre la mémoire tampon 61, au moins un détecteur capacitif disposé dans un volume formé par un premier plan de masse dudit circuit imprimé et un second plan de masse disposé sur une surface interne dudit boîtier, ledit au moins un détecteur capacitif étant configuré pour délivrer une capacité de référence, un microprocesseur de mesure capacitive relié électriquement audit au moins un détecteur capacitif, ledit au moins un microprocesseur étant configuré pour détecter une variation de capacité dudit au moins un détecteur capacitif, des moyens de transmission d'une information représentative de ladite variation de capacité, lorsqu'une valeur absolue d'une différence entre ladite capacité mesurée et ladite capacité de référence excède un seuil prédéterminé.

Ces moyens sont pilotés par le microprocesseur de l'unité de traitement 62.

## Revendications

1. Dispositif de protection (10) d'un terminal de paiement électronique, comprenant un circuit imprimé électronique et un boîtier, ledit dispositif de protection comprenant :
- au moins un détecteur capacitif (12, 41) étant configuré pour délivrer une capacité de référence ;
- un microprocesseur de mesure capacitive (13) relié électriquement audit au moins un détecteur capacitif, ledit au moins un microprocesseur étant configuré pour détecter une variation de capacité dudit au moins un détecteur capacitif ;
- des moyens de transmission (14) d'une information représentative de ladite variation de capacité, lorsqu'une valeur absolue d'une différence entre ladite capacité mesurée et ladite capacité de référence excède un seuil prédéterminé,
**caractérisé en ce que** ledit détecteur capacitif est disposé dans un volume formé par un premier plan de masse (111) dudit circuit imprimé et par un second plan (112) de masse disposé sur une surface interne dudit boîtier.

2. Dispositif de protection selon la revendication 1, **caractérisé en ce qu'**il comprend en outre des moyens de calibrage (15) délivrant ladite capacité de référence.

3. Dispositif de protection selon la revendication 1, **caractérisé en ce que** ledit au moins un détecteur capacitif (12), appelé premier détecteur capacitif (12, 41), est disposé sur un connecteur de carte à mémoire (42).

4. Dispositif de protection selon la revendication 1, **caractérisé en ce qu'**il comprend en outre un deuxième détecteur capacitif (44) connecté à une liaison entrée/sortie du connecteur de carte à mémoire (42).

5. Dispositif de protection selon la revendication 1, **caractérisé en ce que** ledit premier détecteur capacitif (41) est une piste de cuivre de forme spirale carrée (33).

6. Dispositif de protection selon la revendication 1, **caractérisé en ce que** ledit premier détecteur capacitif (12, 41) est déployé selon un plan plein (34).

7. Procédé de protection (50) d'un terminal de paiement électronique, comprenant un circuit imprimé électronique et un boîtier, ledit procédé de protection comprenant :
- une étape de mesure capacitive (53) mise en oeuvre par un microprocesseur de mesure capacitive relié électriquement à au moins un détecteur capacitif, ledit au moins un microprocesseur étant configuré pour détecter une variation de capacité dudit au moins un détecteur capacitif ;
- une étape de transmission (54) d'une information représentative de ladite variation de capacité, lorsqu'une valeur absolue d'une différence entre ladite capacité mesurée et ladite capacité de référence excède un seuil prédéterminé,
**caractérisé en ce que** ledit procédé de protection comprend une étape préalable de disposition (51) dudit détecteur capacitif dans un volume formé par un premier plan de masse dudit circuit imprimé et un second plan de masse disposé sur une surface interne dudit boîtier, ledit au moins un détecteur capacitif étant configuré pour délivrer une capacité de référence .

8. Procédé de protection selon la revendication 7, **caractérisé en ce qu'**il comprend en outre une étape de calibrage (52) délivrant ladite capacité de référence.

9. Terminal de paiement, **caractérisé en ce qu'**il comprend un dispositif de protection selon la revendication 1.

10. Programme d'ordinateur **caractérisé en ce qu'**il comprend des instructions de code programme pour la mise en oeuvre du procédé de protection selon la revendication 7, lorsque le programme est exécuté par un processeur.

## Patentansprüche

1. Schutzvorrichtung (10) für ein elektronisches Zahlungsterminal, umfassend eine elektronische Leiterplatte und ein Gehäuse, die Schutzvorrichtung umfassend:
- mindestens einen kapazitiven Sensor (12, 41), der ausgebildet ist zur Abgabe einer Referenzkapazität;
- einen Mikroprozessor zur kapazitiven Messung (13), der elektrisch mit dem mindestens einen kapazitiven Sensor verbunden ist, wobei der mindestens eine Mikroprozessor ausgebildet ist zur Erfassung einer Kapazitätsänderung des mindestens einen kapazitiven Sensors;
- Mittel (14) zur Übertragung einer für die Kapazitätsänderung repräsentativen Information, wenn ein absoluter Wert einer Differenz zwischen der gemessenen Kapazität und der Referenzkapazität einen vorgegebenen Grenzwert überschreitet,
**dadurch gekennzeichnet, dass** der kapazitive Sensor in einem Raum angeordnet ist, der aus einer ersten Masseebene (111) der Leiterplatte und aus einer zweiten Masseebene (112), die auf einer Innenfläche des Gehäuses angeordnet ist, gebildet ist.

2. Schutzvorrichtung nach Anspruch 1, **dadurch gekennzeichnet, dass** sie ferner Kalibrierungsmittel (15) aufweist, die die Referenzkapazität abgeben.

3. Schutzvorrichtung nach Anspruch 1, **dadurch gekennzeichnet, dass** der mindestens eine kapazitive Sensor (12), genannt erster kapazitiver Sensor (12, 41) auf einem Speicherkartenverbinder (42) angeordnet ist,

4. Schutzvorrichtung nach Anspruch 1, **dadurch gekennzeichnet, dass** sie mindestens einen zweiten kapazitiven Sensor (44) aufweist, der mit einer Eingangs-/Ausgangsverbindung des Speicherkartenverbinders (42) verbunden ist.

5. Schutzvorrichtung nach Anspruch 1, **dadurch gekennzeichnet, dass** der erste kapazitive Sensor (41) eine Kupferbahn mit einer quadratischen Spiralform (33) ist.

6. Schutzvorrichtung nach Anspruch 1, **dadurch gekennzeichnet, dass** der erste kapazitive Sensor (12, 41) gemäß einer Vollebene (34) ausgerichtet ist.

7. Verfahren zum Schutz (50) eines elektronischen Zahlungsterminals, umfassend eine elektronische Leiterplatte und ein Gehäuse, das Schutzverfahren umfassend:
- einen Schritt des kapazitiven Messens (53), der von einem kapazitiven Mess-Mikroprozessor, der elektrisch mit mindestens einem kapazitiven Detektor verbunden ist, ausgeführt wird, wobei der mindestens eine Mikroprozessor ausgebildet ist zur Erfassung einer Kapazitätsänderung des mindestens einen kapazitiven Sensors;
- einen Schritt zur Übertragung (54) einer für die Kapazitätsänderung repräsentativen Information, wenn ein absoluter Wert einer Differenz zwischen der gemessenen Kapazität und der Referenzkapazität einen vorgegebenen Grenzwert überschreitet,
**dadurch gekennzeichnet, dass** das Schutzverfahren einen vorherigen Schritt der Anordnung (51) des kapazitiven Sensors in einem Raum, der aus einer ersten Masseebene der Leiterplatte und aus einer zweiten Masseebene, die auf einer Innenfläche des Gehäuses angeordnet ist, gebildet ist, umfasst, wobei der mindestens eine kapazitive Sensor ausgebildet ist zur Abgabe einer Referenzkapazität.

8. Schutzvorrichtung nach Anspruch 7, **dadurch gekennzeichnet, dass** sie ferner einen Kalibrierungsschritt (52) zur Abgabe der Referenzkapazität aufweist.

9. Zahlungsterminal, **dadurch gekennzeichnet, dass** es eine Schutzvorrichtung nach Anspruch 1 aufweist.

10. Computerprogramm, **dadurch gekennzeichnet, dass** es Programmcode-Befehle zur Durchführung des Schutzverfahrens nach Anspruch 7 aufweist, wenn das Programm von einem Prozessor ausgeführt wird.

## Claims

1. Device for protecting an electronic payment terminal comprising a memory card reader, said terminal comprising an electronic printed circuit board and a casing, said protection device comprising:
- at least one capacitive detector being configured to deliver a reference capacitance;
- a capacitive measurement microprocessor electrically connected to said at least one capacitive detector, said at least one microprocessor being configured to detect a variation of capacitance of said at least one capacitive detector;
- means for transmitting a piece of information representing said variation of capacitance when an absolute value of a difference between said measured capacitance and said reference capacitance exceeds a predetermined threshold,
**characterized in that** said capacitive detector is positioned in a volume formed by a first ground plane of said printed circuit and a second ground plane positioned on an internal surface of said casing.

2. Device for protecting according to claim 1, **characterized in that** it further comprises calibration means delivering said reference capacitance.

3. Device for protecting according to claim 1, **characterized in that** said at least one capacitive detector, called a first capacitive detector, is positioned on a memory card connector.

4. Device for protecting according to claim 1, **characterized in that** it further comprises a second capacitive detector connected to an input/output link of the memory card connector.

5. Device for protecting according to claim 1, **characterized in that** said first capacitive detector is a square spiral shaped copper track.

6. Device for protecting according to claim 1, **characterized in that** said first capacitive detector is deployed in a full plane.

7. Method for protecting an electronic payment terminal comprising an electronic printed circuit board and a casing, said method for protecting comprising:
- a capacitive measurement step implemented by a capacitive measurement microprocessor electrically connected to said at least one capacitive detector, said at least one microprocessor being configured to detect a variation of capacitance of said at least one capacitive detector;
- a step for transmitting a piece of information representing said variation of capacitance when an absolute value of a difference between said measured capacitance and said reference capacitance exceeds a predetermined threshold,
**characterized in that** said method for protecting comprises a preliminary step for positioning at least one capacitive detector in a volume formed by a first ground plane of said printed circuit and a second ground plane positioned on an internal surface of said casing, said at least one capacitive detector being configured to deliver a reference capacitance.

8. Method for protecting according to claim 7, **characterized in that** it further comprises a calibration step delivering said reference capacitance.

9. Payment terminal **characterized in that** it comprises a device for protecting according to claim 1.

10. Computer program comprising program code instructions to implement the protection method according to claim 7, when the program is executed by a processor.
